# EUROPEAN PATENT SPECIFICATION

(11) **EP 4 537 021 B1**
(45) Date of publication and mention of the grant of the patent: **06.05.2026**
(21) Application number: 23734361.1
(22) Date of filing: 31.05.2023
(51) Int. Cl.: F24C 15/20, F24C 7/08, F24C 15/18, G01K 13/00, F24C 15/32, F24C 15/14

(54) **APPLIANCE FOR COOKING DISHES**
GERÄT ZUM GAREN VON SPEISEN
APPAREIL POUR LA CUISSON DE PLATS

(30) Priority: 06.06.2022 IT 202200011852
(43) Date of publication of application: 16.04.2025
(73) Proprietor: ELICA S.p.A., 60044 Fabriano (AN) (IT)
(72) Inventor: CRISÀ, Fabrizio, 60044 Fabriano AN (IT); MARTELLI, Manuele, 60044 Fabriano AN (IT)
(74) Representative: Perani & Partners S.p.A.
(86) International application number: PCT/IB2023/055569
(87) International publication number: WO 2023/237969

(56) References cited:
- EP-A1- 2 950 067
- EP-A2- 2 239 510
- JP-A- S5 620 936
- US-A- 3 587 555
- US-A1- 2006 219 705

## Description

### Technical Field

The present invention relates to an appliance for cooking dishes, in accordance with the preamble of claim 1.

**In** particular, the present invention relates to an appliance for cooking dishes which integrates an oven, a cooking hob and a hood of the type commercially known as a recessed or downdraft hood.

### State of the art

**In** the state of the art there are known apparatuses for cooking food comprising an oven, a hob and a hood for sucking cooking fumes.

**In** particular, some of such apparatuses have downdraft hoods integrated in the cooking hob or alternatively in the top of a kitchen cabinet where the apparatus for cooking dishes is housed.

Such a downdraft hood is configured to generate a descending current having a speed greater than the ascending speed of the fumes due to cooking so that such fumes are sucked towards an opening provided in the cooking hob itself with motion having a downwards direction.

For example, documents US 6,455,818 B1 and US3587555A show appliances for cooking dishes comprising an oven and a cooking hob arranged vertically above the oven.

Such a cooking hob has a central opening arranged between a plurality of cooking zones and is in fluid communication with a suction assembly, positioned below the cooking hob. In use, the suction assembly is configured to generate a negative pressure which results in a suction effect of the cooking fumes through the central slot.

Such an appliance for cooking dishes comprises a filter unit arranged in the slot and vertically removable from the cooking hob to carry out filter cleaning and replacing operations.

Temperature probes for measuring the degree of temperature reached by the food are also known.

Such temperature probes are independent instruments from the appliance.

EP2950067A1 describes an oven comprising a temperature probe which can be used to detect the internal temperature of foods being cooked.

### Problem of the prior art

If such a configuration on the one hand makes the probes more usable as they can be transported or used wherever needed, for example the oven and/or the barbecue at a first home or the oven taken from another home, etc., on the other hand it creates the disadvantage of their storage.

In particular, since the probe is independent of the appliance, the storage is also remote from the appliance. This may mean that, when needed, the temperature probe is not located at that site or that the user no longer remembers where it was stored, making it impossible to use.

This problem is all the more acute if the temperature probe is not used frequently but only occasionally.

There is also a need to increase the measurement speed of the known probes so that the measurements can be taken within a short time of inserting the probe in the dish being cooked.

### Object of the invention

In this context, an object underlying the present invention is to provide an appliance for cooking dishes adapted to facilitate the storage operations of the temperature probe.

In particular, it is an object of the present invention to provide an appliance capable of minimizing the risk of losing the temperature probe during its non-use period.

It is further an object of the present invention to provide an appliance capable of minimizing the temperature measurement time of the dishes.

### SUMMARY OF THE INVENTION

In accordance with the present invention, the technical task indicated and the specified objects are achieved by an appliance for cooking dishes according to the independent claim. Further preferred embodiments are specified in the dependent claims.

### Advantages of the invention

By virtue of the present invention, it is possible to provide an appliance for cooking dishes present which houses the temperature probe in a safe manner.

Furthermore, by virtue of the present invention, the probe is always available and easily accessible.

### BRIEF DESCRIPTION OF THE DRAWINGS

Further features and advantages of the present invention will become more apparent from the description of an exemplary, but not exclusive, and therefore nonlimiting preferred embodiment of an appliance for cooking dishes, as illustrated in the appended figures, in which:
- Figure 1 shows a perspective view, with some elements exploded, of an appliance for cooking dishes according to the present invention;
- Figure 2 shows a front sectional view of the appliance of Figure 1 adapted to show some internal components thereof, in particular Figure 2 shows the paths taken by the cooking fumes inside the appliance;
- Figure 3 shows a perspective view of some components of the appliance of Figure 1, in particular Figure 3 highlights the path of a flow of cooking fumes through such components;
- Figure 4 shows a perspective sectional view of a lower portion of the appliance of Figure 1;

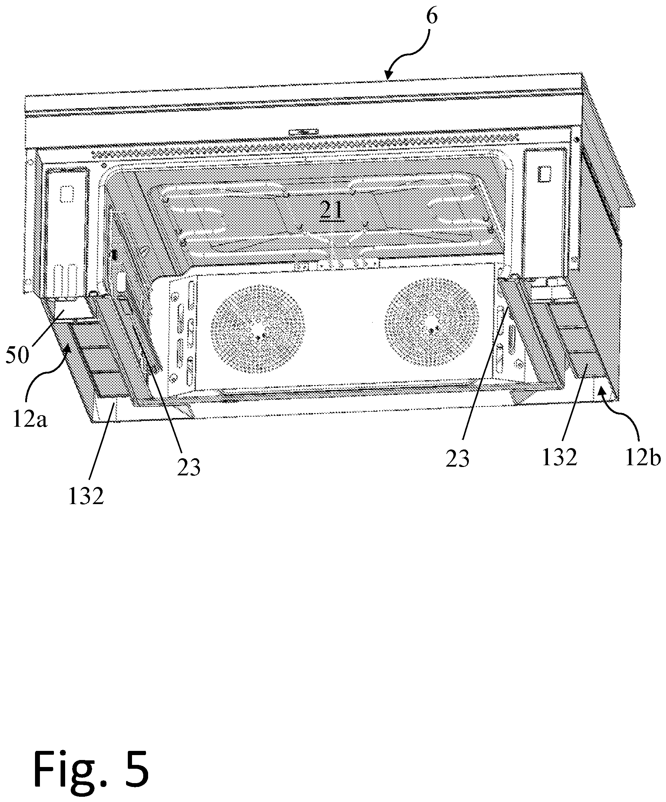

- Figure 5 shows a perspective sectional view of an upper portion of the appliance of Figure 1;
- Figure 6 shows a perspective sectional view of a side portion of the appliance of Figure 1;
- Figure 7 shows a perspective view with some components exploded of a portion of the appliance of Figure 1;
- Figure 8 shows a perspective view of a portion of the appliance of Figure 1;
- Figure 9 shows a perspective view with some components exploded of the appliance of Figure 1.

### DETAILED DESCRIPTION

The present invention relates to a recessed appliance for cooking dishes, indicated by 1 in the accompanying figures.

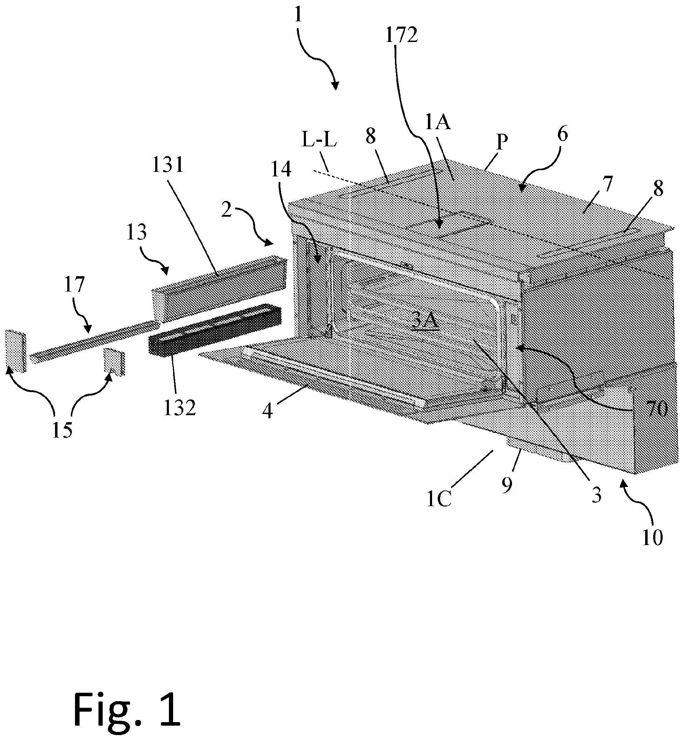

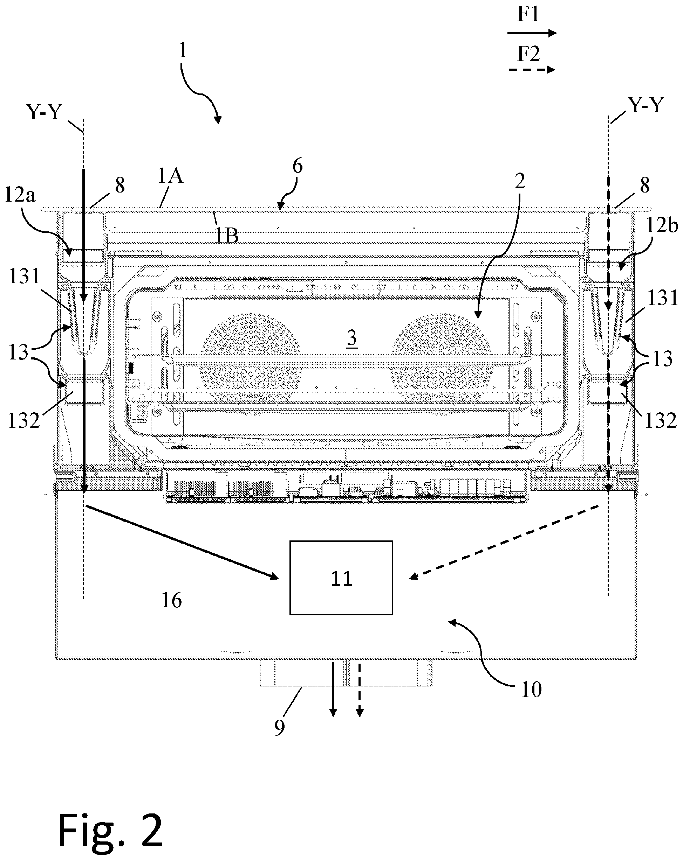

With particular reference to figures 1 and 2, the appliance 1 comprises an oven 2 having a cavity 3 and a door 4 associated to a front surface 3A of the cavity.

It should be specified that in the context of the present invention, cavity 3 is intended as a temperature-controllable cooking chamber adapted to receive one or more dishes to be baked in the oven.

The cavity 3 is delimited above, below, and to the side by respective walls 21, 22, 23 of a frame of the oven 2. According to a preferable embodiment, the cavity has a parallelepiped shape.

The door 4 is configured to selectively provide access inside the cavity 3 of the oven 2 so as to allow the dishes to be cooked to be loaded and the cooked dishes to be unloaded.

In detail, the door 4 is switchable between a cooking position in which it frontally closes the cavity 3, being arranged in the front surface 3A, and an access position in which it allows access to the cavity 3 through the front surface 3A.

Preferably, but not necessarily, the door 4 is constrained in rotation to a main body of the oven so that, rotating around a hinging axis, it switches between the aforesaid cooking and access positions. It should be noted that a person skilled in the art is capable of independently achieving the kinematic connection between the door 4 and the main body of the oven, therefore no further details will be provided in this regard.

The access position, shown in figure 1, will hereinafter also be indicated as maintenance configuration, as it allows the ordinary maintenance operations to be carried out on some components of the appliance 1. More details on this will be provided later in the description.

The appliance 1 object of the present invention further comprises a cooking hob 6 defining an upper surface 1A which limits the appliance 6 above.

The cooking hob 6 comprises a plurality of heating elements 7 suitably distributed on the upper surface 1A and adapted to transmit energy to the bottom of the containers in which the dishes to be heated are kept.

In a preferred embodiment, the at least one heating element 7 is embodied in a resistive, or gas or, preferably, inductive heating element.

Furthermore, the plurality of heating elements can be distributed on the upper surface 1A by means of a plurality of micro-inductors homogeneously distributed throughout the entire cooking hob 6.

Preferably, but not necessarily, the upper surface 1A is made of a glass-ceramic plate.

The appliance 1 object of the present invention further comprises at least one inlet opening 8 arranged on the upper surface 1A of the cooking hob 6 and configured to allow the suction of cooking fumes from the containers of the dishes. Therefore, the inlet opening 8 represents the point at which the suction of the cooking fumes occurs.

The aforesaid inlet opening 8 is through, i.e., it extends in the cooking hob 6, along a thickness direction, between an upper surface 1A and a lower surface 1B opposite the upper one.

According to an aspect, the inlet opening 8 is quadrangular in shape, preferably rectangular with one of its two dimensions much larger with respect to the other.

In particular, it should be specified that the inlet opening 8 is not configured to allow the extraction/insertion of any component of the appliance 1, in particular of the filter and the liquid collection tray described below. That is, the liquid collection tray and the filter have a larger footprint than the passage section of the inlet opening 8, thus geometrically interfering with the latter.

In this regard, it should be noted that it is advantageous to keep the inlet opening 8 of small dimensions to maximize the surface of the cooking hob which can be used to support the containers with which to cook the dishes.

In the embodiment shown in figure 1, the appliance 1 comprises a pair of inlet openings 8 arranged near a peripheral edge P of the cooking hob 6. Preferably, the inlet openings 8 are arranged on opposite sides of the peripheral edge P, thus being located to the sides of the oven cavity along a width direction L-L of the appliance 1.

The appliance 1 further comprises an outlet opening 9 placed in fluid communication with the inlet opening 8 and representing the expulsion point of the sucked cooking fumes.

In the embodiment shown in figures 1 and 2, the outlet opening 9 is arranged at a lower portion 1C of the appliance 1, opposite the cooking hob 6.

As shown in figure 2, the appliance 1 comprises a downdraft-type hood 10.

Preferably, the downdraft-type hood 10 can be operated in suction or filtering mode. In greater detail, in suction mode the hood 10 is configured to eject the cooking fumes in an environment outside the room in which the hood 10 is arranged, preferably an open environment, while in filtering mode the hood 10 ejects the cooking fumes inside the room in which the hood 10 is arranged aver having filtered them.

Such a downdraft hood 10 has one or more suction assemblies 11 each of which is configured to suck the cooking fumes through the inlet opening 8 and to eject them through an outlet opening 9.

The suction assembly 11 is configured to generate a negative pressure (less than atmospheric) responsible for the suction effect of the cooking fumes through the inlet opening 8.

It should be noted that the suction assemblies for downdraft hoods 10, in particular those with centrifugal impeller, are known to a person skilled in the art, therefore they need not be further described.

According to an aspect shown in figures 1 and 2, the appliance 1 object of the present invention comprises a suction chamber 16 inside which the suction assembly 11 is arranged.

The suction chamber 16 is arranged downstream of the one or more inlet openings 8 and upstream of the outlet opening 9 so that the suction assembly is interposed therebetween.

With reference to figure 2, the appliance 1 comprises a conduit system 12 comprising a first cooking fumes path 12a. The sucked cooking fumes flowing along the first cooking fumes path 12a flow between the inlet opening 8 and the outlet opening 9.

In other words, the first cooking fumes path 12a fluid-dynamically connects the inlet opening 8 and the outlet opening 9.

According to an aspect the conduit system 12 is made of metallic material to better resist the heat emanating from the cavity 3 of the oven 2 during its operation. However, other suitable materials can be used instead of metallic.

In the embodiment with two inlet openings 8 shown in figures 1 and 2, the conduit system 12 comprises a cooking fumes path for each inlet opening 8. That is, the conduit system 12 comprises a first and a second cooking fumes path 12a, 12b each of which is associated to a respective inlet opening but with the same outlet opening.

The first and the second cooking fumes path are shown in figure 2 with a first group of solid line arrows F1 and a second group of dashed line arrows F2, respectively.

In the embodiment shown in the attached, the first and the second cooking fumes path 12a, 12b extend along a vertical direction at a respective side wall 23 of the cavity 3 of the oven 2. The oven 2 is thus interposed between the first and the second cooking fumes path 12a, 12b.

With reference to figure 2, the first and the second cooking fumes path 12a, 12b are in fluid communication with the suction chamber 16 upstream of the suction assembly 11.

The appliance 1 further comprises a filter 13 for filtering the sucked cooking fumes.

Such a filter 13 is arranged in the first cooking fumes path 12a of the conduit system 12, in particular upstream of the suction assembly 11.

Therefore, in use, the cooking fumes, once sucked through the inlet opening 8 by the suction effect generated by the suction assembly 11, then proceed along the first cooking fumes path 12a passing through the filter 13 to thus reach the suction assembly 11 and then the outlet opening 9.

It should be specified that in the embodiment of figures 1 and 2 in which there are two inlet openings 8 respectively associated with a first and a second cooking fumes path 12a, 12b, each of the latter comprises a respective filter 13.

For the sake of simplicity, the following will refer exclusively to the first cooking fumes path 12a, however what has been said in relation to the latter is equally valid for the second cooking fumes path 12b.

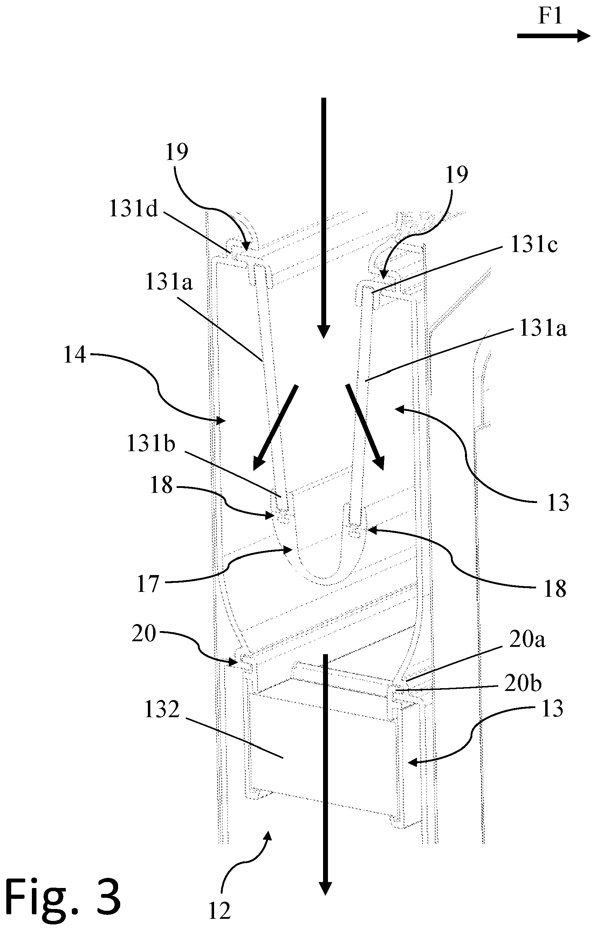

In accordance with what is shown in figure 3, the first cooking fumes path 12a is shaped to create a shape coupling with such a filter 13. More details on the removable anchorage of the filter to the first cooking fumes path 12a will be reported in a later part of the description.

Preferably, the filter 13 comprises a grease filter 131 configured to filter the greases present in the cooking fumes.

Still more preferably, the grease filter 131 is arranged transversely to a main extension direction Y-Y of the first cooking fumes path 12a so as to maximize the surface of the grease filter 131 exposed to the cooking fumes flowing in the first path 12a.

In the embodiment of figures 2 and 3, the grease filter 131 comprises two V-shaped filtering sections 131a. In other words, the grease filter 131 comprises a first filtering section which is inclined with respect to the main extension direction Y-Y of the first cooking fumes path 12a, and a second filtering portion, facing the first filtering section, also inclined with respect to the main extension direction Y-Y. Preferably, the first and the second filtering portion 131a are arranged mirrored with respect to a centreline plane of the grease filter 131.

For example, the grease filter 131 is made by means of one or more metal (or other material having similar characteristics) grilles.

Furthermore, preferably, the filter 13 comprises an odour filter 132 configured to filter the molecules responsible for the odours of the cooking fumes, eliminating them.

In detail, as shown in figures 2 and 3, such an odour filter 132 is arranged downstream with respect to the grease filter 131, i.e., the flow of cooking fumes passes first through the grease filter 131 and then through the odour filter 132.

For example, the odour filter 132 is an activated carbon filter.

It should be specified that the odour filter 132 as well as the grease filter 131 is arranged in the conduit so as to occupy the entire section thereof, so that the entire flow is filtered.

In the embodiment shown in the accompanying figures, the grease filter 131 is separate and distinct from the odour filter 132, i.e., each grease and odour filter is removable/insertable independently of the other, i.e., they are individually movable. More details on the extraction of the grease filter 131 and odour filter 132 will be provided in a later part of the description.

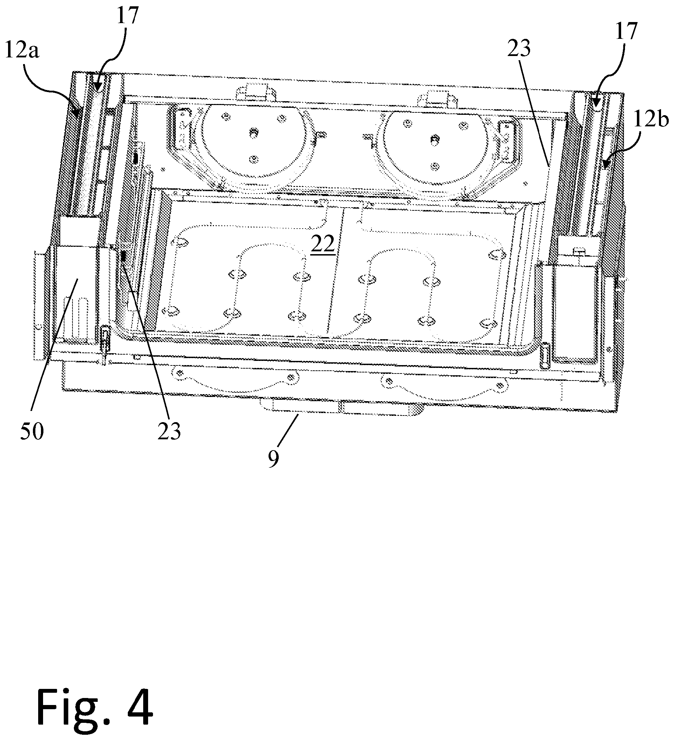

With reference to figures 2-4, the appliance 1 further comprises a liquid collection tray 17 arranged in the first cooking fumes path 12a downstream of the filter 13, in particular of the grease filter 131.

Such a liquid collection tray 17 is configured to collect both the liquid phase present in the air flow suctioned through the inlet opening 8 and any liquids which accidentally fall by gravity through the opening 8.

It should be noted that such a liquid phase comprises both water vapour and fat in liquid form which, after being stopped by the grease filter 131, fall by gravity into the liquid collection tray 17.

In the embodiment of figures 2 and 3, the tray 17 is interposed between the grease filter 131 and the odour filter 132, so that the flow through the odour filter 132 lacks liquid phase or in any case contains low concentrations thereof.

It should be noted that activated carbon filters, often used as odour filters 132, are particularly sensitive to moisture, therefore, the aforementioned arrangement of the liquid collection tray 17 preserves the integrity in the odour filters 132 over time.

According to an aspect shown in figure 3, which will be further elaborated in the description below, the liquid collection tray 17 is removably constrained to the grease filter 131, in particular by means of what will be identified as first guide means 19 in the following.

As known to a person skilled in the art, the liquid collection tray 17, given its finite liquid collection capacity, requires periodic emptying of the liquids accumulated therein.

Furthermore, the suction hood filters of cooking fumes require ordinary maintenance operations which typically involve the cleaning/replacement of filters.

The need for the user to be able to access the liquid collection tray 17 and the filter 13 to respectively carry out the aforementioned operations of emptying the liquid collection tray 17 and/or of ordinary maintenance of the filters 13 is therefore clear.

In greater detail, as shown in figures 1 and 3, the appliance 1 comprises an extraction/insertion opening 14 dimensioned to allow the extraction and insertion of the liquid collection tray 17 and preferably also of the filter 13.

Such an extraction/insertion opening 14 is arranged on the front surface 3A of the cavity 3 of the oven 2.

The liquid collection tray 17, and preferably also the filter 13, is removable/insertable through the opening 14 along a direction transverse to the front surface 3A of the cavity 3. Preferably, the extraction/insertion direction of the liquid collection tray is oriented perpendicularly to the front surface 3A of the cavity 3.

It should be specified that the extraction/insertion opening 14 is accessible when the door 4 allows access inside the cavity 3 of the oven 2, i.e., when it is in the access/maintenance position.

Preferably, the extraction/insertion opening 14 is accessible only and exclusively when the door 4 is in such an access/maintenance position. In fact, when the door 4 is in the cooking position it covers the extraction/insertion opening 14, which is thus inaccessible to the user.

According to a possible embodiment, the extraction/insertion opening 14 comprises a first and a second opening 14a, 14b which are mutually distinct. Preferably, the liquid collection tray 17 and the grease filter 131 are removable/insertable through the first opening 14a, otherwise the odour filter 132 is removable/insertable through the second opening 14b, or vice versa.

Preferably, the appliance 1 comprises closing means 15 associated with the extraction/insertion opening 14 for selectively switching between a first operating configuration in which they hermetically close said extraction/insertion opening 14 and a second operating configuration in which they allow the extraction/insertion of the liquid collection tray 17 and/or the filter 13.

For example, the closing means 15 are embodied in a pressure cap which can be removably coupled with the opening 14.

Advantageously, the closing means 15 arranged in the first operating configuration allow to eliminate air leakages through the extraction/insertion opening 14 which, in use, would entail significant pressure losses in the first cooking fumes path 12a.

If the extraction/insertion opening 14 comprises a first and a second opening 14a, 14b which are mutually distinct in accordance with the above, the closing means 15 comprise first and second closing means 15a, 15b respectively associated in closure with such first and second opening 14a, 14b.

In the following description, focus will be made on possible embodiments of the removable coupling of the filter 13 and the liquid collection tray 17 with the first cooking fumes path 12a.

With reference to the embodiment shown in figure 3, the appliance 1 object of the present invention comprises first guide means 18 adapted to guide the liquid collection tray 17 during its extraction/insertion through the extraction/insertion opening 14.

The first guide means 18 are configured to lead the extraction/insertion of the liquid collection tray 17 transversely, preferably orthogonally, to the front surface 3A of the cavity 3 of the oven 2.

It should be specified that guide means are intended as kinematic devices adapted to allow the relative translational movement between two components along a certain direction which, in the case in question, coincides with the extraction/insertion direction.

In the embodiment of figure 3, the first guide means 18 removably connect the liquid collection tray 17 to the filter 13, in particular to the grease filter 131. Therefore, the liquid collection tray 17 is extractable from the first cooking fumes path 12a independently from the filter 13, in particular from the grease filter 131.

In detail, preferably, the first guide means 18 are arranged near a lower portion of the filter 13, in particular of the grease filter 131.

In the above-mentioned V-shape of the grease filter 131, the lower edges 131b of the filtering sections 131a are connected by the liquid collection tray 17 connected thereto by the first guide means 18.

With reference to figure 3, the first guide means 18 are arranged near the cusp of the V and, preferably, are made by means of profiles complementarily slidable in one another mutually arranged on the tray 17 and on the lower edges 131b of the filtering sections.

In alternative embodiments not shown in the accompanying figures, the liquid collection tray 17 could be directly slidably connected to the first cooking fumes path 12a.

With reference to figures 2 and 3, preferably, the appliance 1 comprises second guide means 19 adapted to guide the filter 13, in particular the grease filter 131, during the extraction/insertion through the extraction/insertion opening 14.

The second guide means 19 are configured to lead the extraction/insertion of the filter 13, in particular of the grease filter 131 transversely, preferably orthogonally, to the front surface 3A of the cavity 3 of the oven 2.

In the embodiment of figure 3, the second guide means 19 removably connect the grease filter 131 to the first cooking fumes path 12a.

In detail, preferably, the second guide means 19 are arranged near an upper portion of the filter 13, in particular of the grease filter 131.

In the aforementioned V shape of the grease filter 131, the second guide means 19 are arranged near the apexes of the V. In particular, the upper edges 131c of the filtering sections 131a are configured to slide in special grooves 131d obtained in the first cooking fumes path 12a.

With reference to figure 3, preferably, the appliance 1 comprises third guide means 20 adapted to guide the odour filter 132, during its extraction/insertion through the extraction/insertion opening 14

The third guide means 20 are configured to lead the extraction/insertion of the odour filter 132 transversely, preferably orthogonally, to the front surface 3A of the cavity 3 of the oven 2.

In the embodiment of figure 3, the third guide means 20 comprise a groove 20a obtained in the first cooking fumes path 12a, and a slider 20b obtained on the odour filter 132 and adapted to slide in the special groove.

According to an aspect of the present invention, between the extraction/insertion opening 14 and the door 4 arranged in the cooking position, a chamber is created which is adapted to receive accessories of the appliance 1.

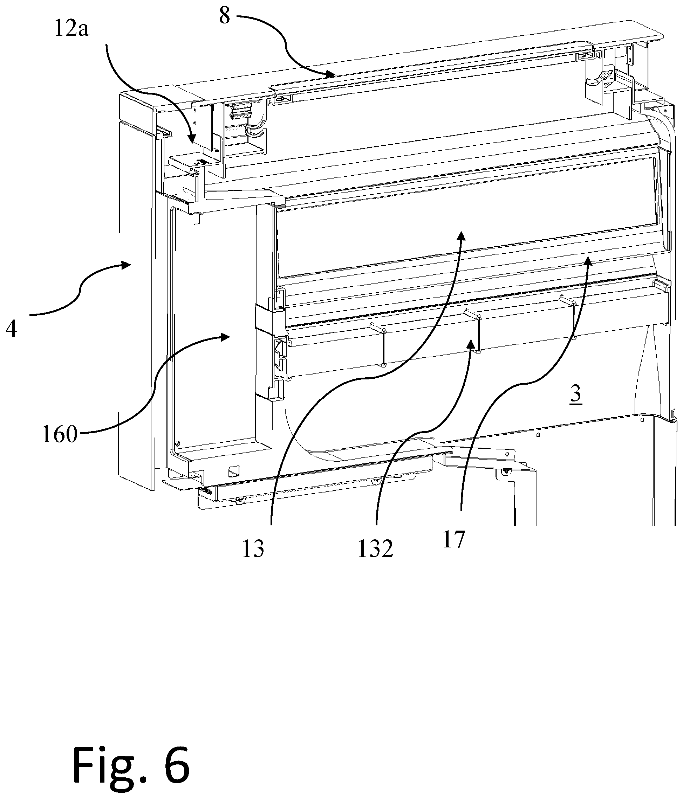

With reference now to figure 6, it should be noted that the appliance 1 comprises a first chamber 160 associated with the first cooking fumes suction path 12a.

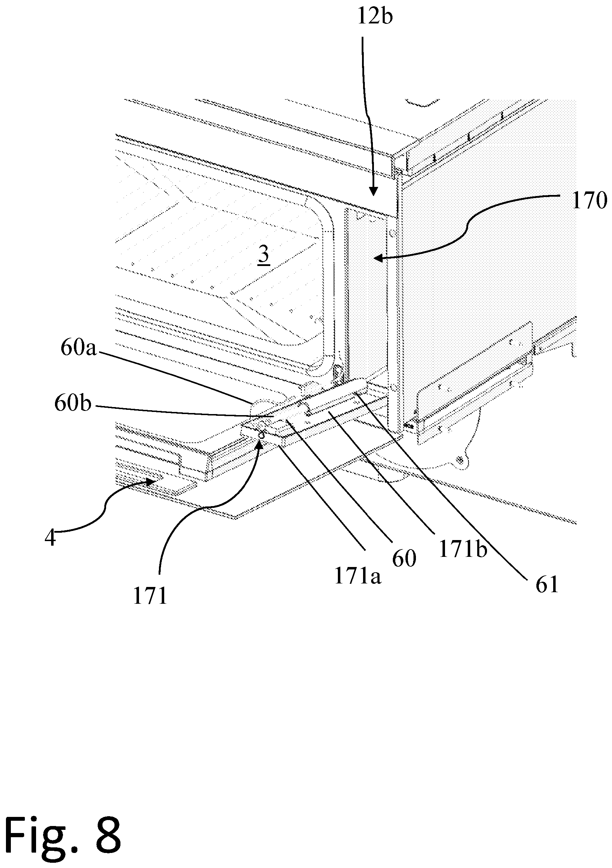

A similar chamber 170 (Figure 8) is associated with the second cooking fumes suction path 12b.

The first and the second chamber 160, 170 are arranged on opposite sides of the cavity 3 of the oven 2 along the width direction L-L of the appliance.

It should be noted that the chamber(s) 160, 170, while being distinct from the fumes suction path, i.e., the chambers are not directly crossed by the sucked fumes, in use have a temperature substantially similar to that of the fumes suction path. In particular, when the hood 10 is operating, and the dishes are cooking on the cooking hob 6, the fumes that are sucked through the channels 12a and 12b are hot. Such hot fumes also heat the volume of the chambers 160, 170 by conduction/convention.

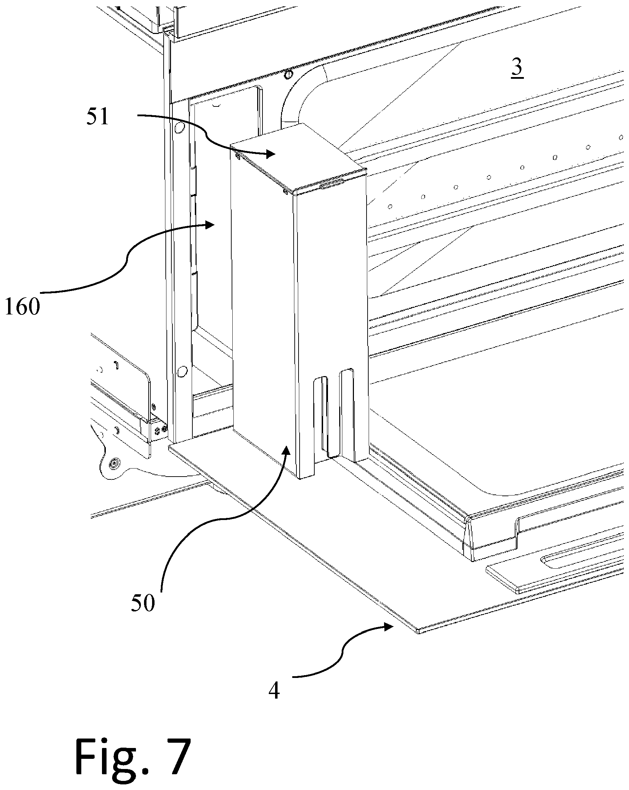

With reference to Figure 7, and according to an aspect of the present disclosure, the oven 2 is arranged to perform the steam cooking of the dishes and comprises, for this purpose, a tank 50 adapted to contain water.

The tank 50 is removably arranged in one of the two chambers. For example, it is arranged in the first chamber 160 as shown in the accompanying Figures.

The extraction of the tank 50 occurs along an extraction direction transverse to the direction Y-Y, preferably orthogonal.

It should be noted that the user must first remove the tank 50 in order to remove the tray 17 and the filter 13 and/or 132.

In other words, the tank 50 is placed in front with respect to the tray 17 and the grease 13 and odour 132 filters.

Such a tank 50 has an intake 51 for loading water and an outlet (not shown), preferably provided with what is known as an aquastop system.

The intake 51 for loading water can be a hinged door or a cap or an equivalent system allowing access inside the tank 50 so as to facilitate the water loading or unloading operations.

The appliance 1 comprises a suitable hydraulic circuitry (not shown) and a boiler (not shown), the latter configured to generate steam to be introduced into the cooking compartment 3 in accordance with the selected program.

To this end, the tank 50 is in fluid communication through its outlet by means of the hydraulic circuitry with the boiler.

Advantageously, the tank 50 is placed in the chamber 160 (or 170) which, as mentioned, benefits from the heat provided by the passage of the cooking fumes suction path 12a. This has the advantage that the water contained in the tank 50 also balances with the temperature present in the chamber 160. Therefore, at the moment when the generation of steam is required, the appliance 1 needs a lower energy input to induce the passage from liquid to gas state of the water contained in the tank 50. This situation is evident since the water introduced into the tank 50 is at the temperature of the mains water i.e., variable in a range between 12 and 18°C, while, thanks to the heat of the sucked fumes, the temperature of the chamber 160 is significantly higher than the aforementioned range.

With reference now to Figure 8, it should be noted that the appliance 1 comprises a temperature probe 60 which is configured to detect the internal temperature of the dishes being cooked in the oven 2 and/or on the cooking hob 6.

In particular, the probe 60 is removably arranged in one of the aforementioned chambers 160, 170. It should be noted that also the probe 60, arranged in one of the aforementioned chambers which are associated with the cooking fumes path, benefits from the heat provided by the passage of the cooking fumes in the suction path. Advantageously, the preheating of the probe allows to reduce the time required to carry out the detection of the temperature of the foods. In this regard, it should be specified that, as is known, the temperature probes carry out the measurement by increasing their temperature up to that of the food. Therefore, the preheating of the probe reduces the thermal jump which it must make to carry out the measurement and thus the measurement times.

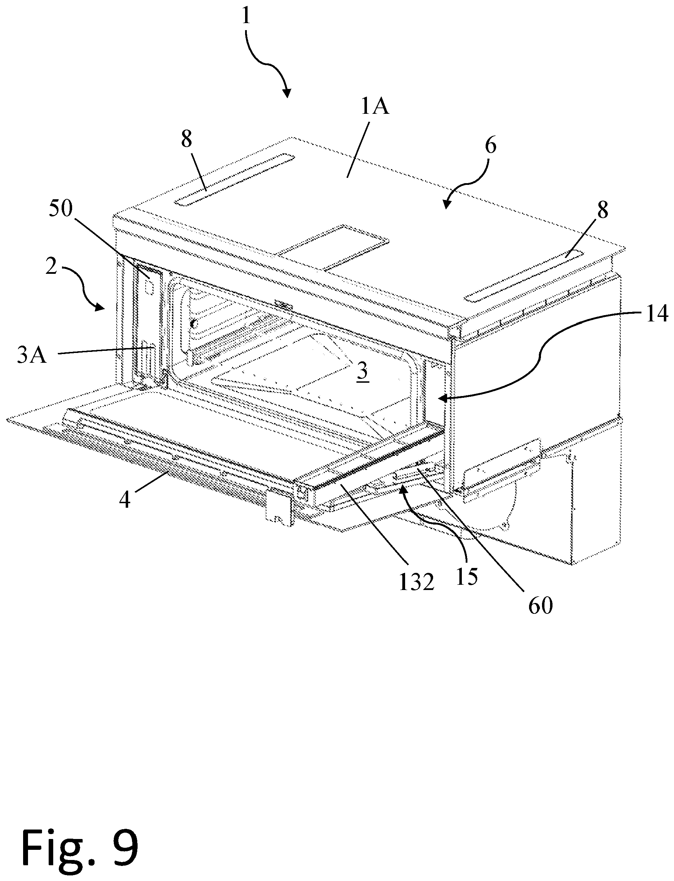

According to the embodiment shown in Figures 8 and 9, the temperature probe 60 is arranged in the chamber 170 and is accessible to the user when the door 4 allows access inside the cavity 3 of the oven 2.

In particular, the chamber 170 is closed by a dividing element 171 mechanically connected, preferably hinged, to the front surface of the oven 2. Such a dividing element 171 is movable between a closed position in which it prevents access to the chamber 170 and an open position in which it allows access to the chamber 170.

Thus to access the probe 60, the door 4 must be in the position allowing access inside the cavity 3 of the oven 2 and the dividing element 171 must be in the open position.

It should also be noted that only in the opening position of the dividing element 171 (and therefore when the door 4 is in the position which allows access to the cavity 3) is it possible to remove the filters 131, 132 and/or the tray 17, after having removed the closing means 15 from the opening 14.

Such a dividing element 171, in its closed position, has a surface 171a visible to the user and an opposite surface 171b hidden from the user's view.

The appliance 1 comprises a pocket 61 configured to house the probe 60 when the latter is not in use.

Such a pocket 61 is obtained on the surface 171b of the dividing element 171.

When the dividing element 171 is in the open position, the pocket 61 is directly accessible to the user who can extract the probe 60 and position it near or within the cooking dishes whether they are in the cavity 3 of the oven 2 or in a pot on the cooking hob 6.

Advantageously, when the temperature detection operation is finished, the user will not have to do anything other than store the probe 60 in the pocket 61, bring the dividing element 171 in the closing position so as to safely store the probe itself.

It should be noted that the probe 60 is in signal communication with a control interface 172 to transmit data related to the temperature of the dish.

Such signal communication can be by means of a wired or wireless connection.

In detail, in the embodiment of figure 8, the temperature probe 60 comprises a sensitive element 60a adapted to acquire a signal related to the internal temperature of the dishes being cooked in the oven 2, and a cable 60b configured to put the sensitive element 60a in signal communication with the control interface 172. In use, the sensitive element 60a acquires a temperature signal and transmits it to the control interface 172 by means of the cable 60b.

Furthermore, preferably, the oven 2 comprises an inlet (not shown in the figures) configured to receive a portion of the cable 60b when the sensitive element 60a is arranged in the cavity 3 of the oven 2 and the door 4 is in the cooking position.

According to an aspect, the inlet is made by an interruption of the gasket arranged near the opening for access to the cavity 3 of the oven. Alternatively, the gasket can have a yielding portion which, when deformed, defines the interruption. The latter embodiment is preferable because it minimizes heat loss while cooking the dishes in the oven.

It should be noted that the inlet and the cable 60b allow the temperature detection to be carried out even with the door 4 in the closed position. Advantageously, unlike the known devices in which the measurement is carried out with the door open, this allows to prevent the heat accumulated in the cavity 3 of the oven 2 from escaping during the measuring step, thus reducing the consumption of the appliance.

It should be noted that the temperature probe 60 detects the temperature values reached by the food being cooked at several points of its surface.

Such points are preferably distributed along the main extension direction of the probe 60 which in the illustrated case is shaped like a cylinder (having a height greater than the width) with a pointed end and a distal end suitably shaped to be gripped by the user.

The temperature data of the survey points of the probe 60 can be transmitted to the control interface 172 independently of one another or as an average value.

According to an aspect, the control interface 172 as a function of such data manages the power to be applied to the heating elements of the cooking hob or oven.

Clearly, in order to satisfy contingent and specific needs, a person skilled in the art may make numerous modifications and variants to the configurations described above. Such modifications and variations are all also contained within the scope of the invention, as defined by the following claims.

## Claims

1. Appliance (1) for cooking dishes, comprising:
- an oven (2) having a cavity (3) and a door (4) associated with a front surface (3A) of the cavity (3) and said door (4) being configured to selectively provide access inside the cavity (3) of the oven (2);
- a cooking hob (6) comprising at least one heating element (7), the cooking hob (6) defining an upper surface (1A) of the cooking appliance (1);
- at least one inlet opening (8) provided in said upper surface (1A) of the cooking hob (6);
- at least one outlet opening (9);
- a downdraft hood (10) having at least one suction assembly (11) configured to suck the cooking fumes through said at least one inlet opening (8) and to expel them through said outlet opening (9);
- a conduit system (12) comprising a cooking fumes path (12a, 12b) for the sucked fumes to flow between the inlet opening (8) and the outlet opening (9);
- a filter (13) for filtering the sucked cooking fumes, said filter (13) being arranged in said cooking fumes path (12a, 12b), said filter (13) being placed upstream of said suction assembly (11);
**characterized in that** the appliance comprises a temperature probe (60) arranged in a chamber (160, 170) associated with the cooking fumes suction path (12a, 12b), said temperature probe (60) being accessible when said door (4) allows access inside the cavity (3) of the oven (2).

2. Appliance (1) for cooking dishes according to claim 1, comprising a dividing element (171) mechanically connected to the front surface of the oven (2), said dividing element (171) being movable between a closed position in which it prevents access to the chamber (160, 170) and an open position in which it allows access to the chamber (160, 170), said temperature probe (60) being accessible when said dividing element (171) is in the open position.

3. Appliance (1) for cooking dishes according to claim 2, wherein said dividing element (171) in its closing position, has a first surface (171a) visible by the user and a second surface (171b), opposite the first surface (171a) hidden from the user's view.

4. Appliance (1) for cooking dishes according to claim 3, comprising a pocket (61) configured to house the temperature probe (60) when the latter is not in use, said pocket (61) is obtained on the second surface (171b) of the dividing element (171).

5. Appliance (1) for cooking dishes according to claim 1, comprising a control interface (172) configured to control the functionality of the appliance, said temperature probe (60) being in signal communication with said control interface (172) to transmit data related to the temperature of the dish.

6. Appliance (1) for cooking dishes according to claim 5, wherein said signal communication occurs by means of a wireless connection.

7. Appliance (1) for cooking dishes according to claim 5, wherein said signal communication occurs by means of a wired connection.

8. Appliance (1) according to claim 7, wherein:
- the temperature probe (60) comprises a sensitive element (60a) adapted to acquire a signal related to the internal temperature of the dishes being cooked in the oven (2), and a cable (60b) configured to put the sensitive element (60a) in signal communication with the control interface (172),
- the oven (2) comprises an inlet configured to receive a portion of the cable (60b) when the sensitive element (60a) is arranged in the cavity (3) of the oven (2) and the door (4) is closed.

9. Appliance (1) for cooking dishes according to claim 1, said temperature probe (60) detects at several survey points of its surface the temperature values reached by the food being cooked.

10. Appliance (1) for cooking dishes according to claim 7, said survey points being distributed along the main extension direction of the temperature probe (60).

## Patentansprüche

1. Gerät (1) zum Garen von Speisen, umfassend:
- einen Backofen (2) mit einem Garraum (3) und einer Tür (4), die einer Vorderseite (3A) des Garraums (3) zugeordnet ist, und wobei die Tür (4) so konfiguriert ist, dass sie selektiv Zugang zum Inneren des Garraums (3) des Backofens (2) bereitstellt;
- ein Kochfeld (6), das mindestens ein Heizelement (7) umfasst, wobei das Kochfeld (6) eine Oberseite (1A) des Gargeräts (1) definiert;
- mindestens eine Einlassöffnung (8), die in der Oberseite (1A) des Kochfelds (6) vorgesehen ist;
- mindestens eine Auslassöffnung (9);
- eine Downdraft-Dunstabzugshaube (10) mit mindestens einer Ansauganordnung (11), die so konfiguriert ist, dass sie die Kochdünste durch die mindestens eine Einlassöffnung (8) ansaugt und sie durch die Auslassöffnung (9) ausstößt;
- ein Leitungssystem (12), das einen Kochdunstweg (12a, 12b) für die angesaugten Dünste zum Strömen zwischen der Einlassöffnung (8) und der Auslassöffnung (9) umfasst;
- einen Filter (13) zum Filtern der angesaugten Kochdünste, wobei der Filter (13) in dem Kochdunstweg (12a, 12b) angeordnet ist, wobei der Filter (13) stromaufwärts von der Ansauganordnung (11) platziert ist;
**dadurch gekennzeichnet, dass** das Gerät
einen Temperaturfühler (60) umfasst, der in einer Kammer (160, 170) angeordnet ist, die dem Kochdunst-Ansaugweg (12a, 12b) zugeordnet ist, wobei der Temperaturfühler (60) zugänglich ist, wenn die Tür (4) den Zugang zum Inneren des Garraums (3) des Backofens (2) ermöglicht.

2. Gerät (1) zum Garen von Speisen nach Anspruch 1, umfassend ein Trennelement (171), das mechanisch mit der Vorderseite des Backofens (2) verbunden ist, wobei das Trennelement (171) zwischen einer geschlossenen Position, in der es den Zugang zur Kammer (160, 170) verhindert, und einer offenen Position, in der es den Zugang zur Kammer (160, 170) ermöglicht, beweglich ist, wobei der Temperaturfühler (60) zugänglich ist, wenn das Trennelement (171) sich in der offenen Position befindet.

3. Gerät (1) zum Garen von Speisen nach Anspruch 2, wobei das Trennelement (171) in seiner geschlossenen Position eine erste, für den Benutzer sichtbare Oberfläche (171a) und eine zweite, der ersten Oberfläche (171a) gegenüberliegende, vor dem Blick des Benutzers verborgene Oberfläche (171b) aufweist.

4. Gerät (1) zum Garen von Speisen nach Anspruch 3, umfassend eine Tasche (61), die konfiguriert ist, um den Temperaturfühler (60) aufzunehmen, wenn dieser nicht in Gebrauch ist, wobei die Tasche (61) an der zweiten Oberfläche (171b) des Trennelements (171) ausgebildet ist.

5. Gerät (1) zum Garen von Speisen nach Anspruch 1, umfassend eine Steuerschnittstelle (172), die konfiguriert ist, um die Funktionalität des Geräts zu steuern, wobei der Temperaturfühler (60) in Signalkommunikation mit der Steuerschnittstelle (172) steht, um Daten bezüglich der Temperatur der Speise zu übertragen.

6. Gerät (1) zum Garen von Speisen nach Anspruch 5, wobei die Signalkommunikation mittels einer drahtlosen Verbindung erfolgt.

7. Gerät (1) zum Garen von Speisen nach Anspruch 5, wobei die Signalkommunikation mittels einer drahtgebundenen Verbindung erfolgt.

8. Gerät (1) nach Anspruch 7, wobei:
- der Temperaturfühler (60) ein Sensorelement (60a), das dazu eingerichtet ist, ein Signal bezüglich der Innentemperatur der im Backofen (2) gegarten Speisen zu erfassen, und ein Kabel (60b) umfasst, das konfiguriert ist, um das Sensorelement (60a) in Signalkommunikation mit der Steuerschnittstelle (172) zu bringen,
- der Backofen (2) einen Einlass umfasst, der konfiguriert ist, um einen Teil des Kabels (60b) aufzunehmen, wenn das Sensorelement (60a) im Garraum (3) des Backofens (2) angeordnet ist und die Tür (4) geschlossen ist.

9. Gerät (1) zum Garen von Speisen nach Anspruch 1, wobei der Temperaturfühler (60) an mehreren Messpunkten seiner Oberfläche die von dem Gargut erreichten Temperaturwerte erfasst.

10. Gerät (1) zum Garen von Speisen nach Anspruch 7, wobei die Messpunkte entlang der Haupterstreckungsrichtung des Temperaturfühlers (60) verteilt sind.

## Revendications

1. Appareil (1) pour la cuisson de plats, comprenant :
- un four (2) ayant une cavité (3) et une porte (4) associée à une surface avant (3A) de la cavité (3) et ladite porte (4) étant configurée pour fournir sélectivement un accès à l'intérieur de la cavité (3) du four (2) ;
- une table de cuisson (6) comprenant au moins un élément chauffant (7), la table de cuisson (6) définissant une surface supérieure (1A) de l'appareil de cuisson (1) ;
- au moins une ouverture d'entrée (8) prévue dans ladite surface supérieure (1A) de la table de cuisson (6) ;
- au moins une ouverture de sortie (9) ;
- une hotte aspirante à tirage vers le bas (10) ayant au moins un ensemble d'aspiration (11) configuré pour aspirer les fumées de cuisson à travers ladite au moins une ouverture d'entrée (8) et pour les expulser à travers ladite ouverture de sortie (9) ;
- un système de conduits (12) comprenant un trajet de fumées de cuisson (12a, 12b) pour que les fumées aspirées s'écoulent entre l'ouverture d'entrée (8) et l'ouverture de sortie (9) ;
- un filtre (13) pour filtrer les fumées de cuisson aspirées, ledit filtre (13) étant agencé dans ledit trajet de fumées de cuisson (12a, 12b), ledit filtre (13) étant placé en amont dudit ensemble d'aspiration (11) ;
**caractérisé en ce que** l'appareil
comprend une sonde de température (60) agencée dans une chambre (160, 170) associée au trajet d'aspiration des fumées de cuisson (12a, 12b), ladite sonde de température (60) étant accessible lorsque ladite porte (4) permet un accès à l'intérieur de la cavité (3) du four (2).

2. Appareil (1) pour la cuisson de plats selon la revendication 1, comprenant un élément de séparation (171) relié mécaniquement à la surface avant du four (2), ledit élément de séparation (171) étant mobile entre une position fermée dans laquelle il empêche l'accès à la chambre (160, 170) et une position ouverte dans laquelle il permet l'accès à la chambre (160, 170), ladite sonde de température (60) étant accessible lorsque ledit élément de séparation (171) est dans la position ouverte.

3. Appareil (1) pour la cuisson de plats selon la revendication 2, dans lequel ledit élément de séparation (171), dans sa position de fermeture, a une première surface (171a) visible par l'utilisateur et une seconde surface (171b), opposée à la première surface (171a), cachée de la vue de l'utilisateur.

4. Appareil (1) pour la cuisson de plats selon la revendication 3, comprenant une poche (61) configurée pour loger la sonde de température (60) lorsque cette dernière n'est pas utilisée, ladite poche (61) étant obtenue sur la seconde surface (171b) de l'élément de séparation (171).

5. Appareil (1) pour la cuisson de plats selon la revendication 1, comprenant une interface de commande (172) configurée pour commander la fonctionnalité de l'appareil, ladite sonde de température (60) étant en communication de signal avec ladite interface de commande (172) pour transmettre des données relatives à la température du plat.

6. Appareil (1) pour la cuisson de plats selon la revendication 5, dans lequel ladite communication de signal s'effectue au moyen d'une connexion sans fil.

7. Appareil (1) pour la cuisson de plats selon la revendication 5, dans lequel ladite communication de signal s'effectue au moyen d'une connexion filaire.

8. Appareil (1) selon la revendication 7, dans lequel :
- la sonde de température (60) comprend un élément sensible (60a) apte à acquérir un signal relatif à la température interne des plats en cours de cuisson dans le four (2), et un câble (60b) configuré pour mettre l'élément sensible (60a) en communication de signal avec l'interface de commande (172),
- le four (2) comprend une entrée configurée pour recevoir une partie du câble (60b) lorsque l'élément sensible (60a) est agencé dans la cavité (3) du four (2) et que la porte (4) est fermée.

9. Appareil (1) pour la cuisson de plats selon la revendication 1, dans lequel ladite sonde de température (60) détecte en plusieurs points de mesure de sa surface les valeurs de température atteintes par l'aliment en cours de cuisson.

10. Appareil (1) pour la cuisson de plats selon la revendication 7, dans lequel lesdits points de mesure sont répartis le long de la direction d'extension principale de la sonde de température (60).
